# FASCICULE DE BREVET EUROPEEN

(11) **EP 1 532 618 B1**
(45) Date de publication et mention de la délivrance du brevet: **25.04.2007**
(21) Numéro de dépôt: 03763930.9
(22) Date de dépôt: 04.07.2003
(51) Int. Cl.: G09G 5/00

(54) **UNITE ET PROCEDE DE GESTION D'AFFICHAGE SUR UN ECRAN D'UNE PORTION COURANTE DE DOCUMENT**
EINHEIT UND VERFAHREN ZUM VERWALTEN DER ANZEIGE EINES AKTUELLEN TEILS EINES DOKUMENTS AUF EINEM SCHIRM
UNIT AND METHOD FOR MANAGING THE DISPLAY OF A CURRENT PORTION OF A DOCUMENT ON A SCREEN

(30) Priorité: 08.07.2002 FR 0208538
(43) Date de publication de la demande: 25.05.2005
(73) Titulaire: Thomson Licensing, 92100 Boulogne-Billancourt (FR)
(72) Inventeur: VILLERS, Jean-Stéphane, F-95800 CERGY PONTOISE (FR)
(74) Mandataire: Berthier, Karine
(86) Numéro de dépôt international: PCT/FR2003/002080
(87) Numéro de publication internationale: WO 2004/008426

(56) Documents cités:
- US-A- 6 011 537

## Description

### DOMAINE TECHNIQUE

L'invention concerne une unité et un procédé de gestion d'affichage sur un écran d'une portion courante de document accessoirement interactif, par exemple HTML.

### ETAT DE LA TECHNIQUE ANTERIEURE

Dans un document interactif HTML (voir le document référencé [1] en fin de description), un ensemble d'objets ayant pour la plupart une représentation graphique est décrit. Ces objets peuvent être un texte simple, une image simple, un hyperlien, un bouton poussoir, une case de saisie de texte... Tous ces objets doivent être affichés dans une fenêtre à l'écran de la façon la plus harmonieuse, sans se chevaucher et en optimisant l'espace disponible. Un document HTML n'impose pas la disposition des objets à l'écran. Celle-ci se fera en fonction des contraintes de la zone d'affichage et de certaines caractéristiques graphiques configurables ou à la discrétion du moteur d'affichage. L'opération s'appelle la mise en page. Mais néanmoins des règles générales de disposition.des objets HTML doivent être respectées. Certains éléments HTML, comme les tableaux par exemple, peuvent devenir illisibles s'ils ne sont pas présentés sous une forme proche de celle d'origine.

Un document HTML ne peut être affiché directement. Il nécessite une analyse des objets qui le composent avant de pouvoir faire une mise en page, par exemple des objets relatifs les uns par rapport aux autres ou des objets imbriqués. De plus, ce document HTML ne contient pas toujours les données suffisantes pour mettre en forme proprement le document, principalement lorsque celui-ci contient des images. La taille des images n'est pas toujours connue. Il est nécessaire de charger ces images (requête sur un nouveau document) afin d'en extraire la taille et de pouvoir poursuivre la mise en forme du document.

Le format HTGF ("Hyper Text Graphic Format") correspond à la transcription graphique des documents HTML en fonction des contraintes dimensionnelles de la fenêtre d'affichage c'est à dire au résultat de la mise en page. Ce format décrit des objets graphiques indépendants les uns des autres ayant tous un positionnement absolu.

Une page interactive HTML est constitué d'un ensemble de fichiers qui peuvent être interprétés par un programme de lecture pour produire une sortie visuelle, et éventuellement audio, sur un moniteur d'ordinateur ou sur un écran de télévision. Un fichier HTML, que l'on peut nommer "document principal", peut contenir des références à des éléments externes, comme notamment des fichiers visibles ou visualisables sur la page, qui seront appelés "documents secondaires".

Afin d'effectuer le rendu d'une page HTML, ces documents secondaires doivent être chargés, stockés en mémoire et traités par un moteur d'affichage.

Le rendu d'une page HTML peut dépasser l'espace disponible sur l'écran de visualisation. Dans ce cas cet écran n'affiche qu'une partie de la page HTML et l'utilisateur doit faire défiler l'affichage pour voir les parties restantes de la page HTML qui a été stockée en mémoire.

Dans le cas où la page HTML contient des références à des documents secondaires, les données chargées peuvent nécessiter des capacités mémoire considérables pour le stockage, comme par exemple un document HTML qui contient beaucoup d'images. Les capacités mémoire disponibles dans un dispositif de visualisation, par exemple de type décodeur, peuvent être insuffisantes et les erreurs dues à un débordement de mémoire peuvent se produire lors du rendu de certaines pages HTML grosses consommatrices de mémoire. Les pages HTML ne peuvent alors être restituées.

L'invention a pour objectif de pallier ces inconvénients en proposant une unité et un procédé de gestion d'affichage sur un écran d'une portion courante de document accessoirement interactif.

L'art antérieur connaît, par le brevet américain US 6 011 537 (Benjamin Slotznick), un système pour la fourniture et l'affichage simultanés d'informations primaires et secondaires, et pour l'affichage d'informations secondaires durant un espace interstitiel seulement. Un système permet d'afficher des informations au niveau d'un ordinateur local d'un utilisateur. Les informations comprennent des informations primaires représentant des informations demandées par un utilisateur et des informations secondaires représentant des informations additionnelles. Les informations primaires sont extraites d'un premier dispositif de mémoire comportant des informations, un délai existant entre le moment de requête et le moment où les informations primaires sont disponibles pour un affichage. Les informations secondaires sont extraites d'un second dispositif de mémoire comportant des informations. Les informations primaires et secondaires sont stockées dans un dispositif de stockage local de l'ordinateur de l'utilisateur, comme une mémoire cache. Un contrôleur d'affichage fait en sorte que les informations primaires soient affichées de façon simultanée avec une partie des informations secondaires sur l'écran de l'utilisateur. Quand l'utilisateur demande l'extraction d'informations primaires suivantes, un affichage complet des informations secondaires remplace les informations primaires pendant au moins une partie du délai d'extraction des informations primaires suivantes. Les informations primaires suivantes sont affichées une fois qu'elles sont reçues. L'affichage complet des informations secondaires dure pendant une période de temps prédéterminée ou peut être conservée sur l'écran sur demande de l'utilisateur. L'utilisateur peut également directement demander un affichage de toutes les informations secondaires sans demander l'extraction des informations primaires suivantes. Le système peut être implémenté dans un environnement Internet dans lequel les informations primaires et secondaires sont extraites d'un ou plusieurs sites Web distants.

L'art antérieur connaît également, par la demande de brevet européen EP 1 164 499 (Canal + Technologies), un procédé et un système pour afficher une page source encodée en un langage de type *mark-up.* Des modes de réalisation sont relatifs à l'affichage de documents encodés en HTML *(Hypertext Mark-Up Language).* Le procédé comprend une étape de traduction au cours de laquelle la source en langage *mark-up* est traduite en données dans un format intermédiaire et une étape d'affichage au cours de laquelle un affichage présentant la page est généré. Les données en langage intermédiaire comprennent de préférence toutes les informations nécessaires pour générer l'affichage lors de l'étape d'affichage, de telle sorte qu'on ne se réfère pas à la source en langage de type *mark-up* pendant l'étape d'affichage. Les données en langage intermédiaire sont de préférence des données en format binaire.

### EXPOSE DE L'INVENTION

L'invention a pour objet une unité de gestion d'affichage pour afficher sur un écran une portion courante de document, lorsqu'une page interactive, dite déroulante, de ce document requiert une zone d'affichage de dimension supérieure à la dimension dudit écran, ladite unité comprenant :
- une unité de liaison à un serveur distant, ledit serveur délivrant des documents interactifs constitués de documents principaux et de documents secondaires,
- une unité d'affichage pour contrôler l'affichage sur l'écran d'une portion courante de ladite page interactive déroulante,
caractérisée en ce qu'elle comprend, en outre, une mémoire et une unité de gestion de cette mémoire qui comprend :
- une unité d'attribution de niveaux de priorité pour attribuer à chaque document secondaire de la page interactive déroulante un niveau de priorité qui est fonction du positionnement de chaque document secondaire par rapport à la portion courante affichée sur l'écran,
- une unité de contrôle de mémoire pour contrôler le stockage dans la mémoire des documents secondaires ayant les niveaux de priorité les plus élevés, en coopération éventuelle avec l'unité de liaison pour accéder à certaines de ces documents secondaires ayant les niveaux de priorité les plus élevés lorsque ces derniers ne sont pas stockés dans la mémoire.

Le mot "serveur" est utilisé ici pour définir tout type d'équipement de stockage d'informations.

Avantageusement, l'unité de gestion de l'invention comprend, en outre, une unité de conversion de format qui permet une décompression des images.

De plus, l'unité de liaison peut être reliée au serveur distant par une liaison monodirectionnelle ou bidirectionnelle. La page interactive peut-être une page HTML. Un clavier et/ou une souris et/ou une télécommande peuvent être reliés à l'unité d'affichage.

L'invention concerne également un procédé de gestion d'affichage sur un écran d'une portion courante de document, lorsqu'une page interactive, dite déroulante, de ce document requiert une zone d'affichage de dimension supérieure à la dimension dudit écran, ledit procédé comprenant :
- une étape de téléchargement de documents interactifs constitués de documents principaux et de documents secondaires,
- une étape d'affichage sur l'écran d'une portion courante de ladite page interactive déroulante,
caractérisé en ce qu'il comprend, en outre, une étape de stockage sélectif dans une mémoire de documents secondaires de la page interactive déroulante qui sont positionnées dans une zone voisine de la portion courante affichée sur l'écran.

Avantageusement, on tient à jour, pour chaque document secondaire de la page interactive, une valeur binaire déterminant si oui ou non cette composante est stockée en mémoire, et son niveau de priorité de téléchargement.

On peut allouer à chaque document secondaire de la page interactive un niveau de priorité en utilisant un modèle, par exemple gaussien, tel que la priorité d'un document secondaire dépend de sa distance par rapport au point central de la nouvelle position courante à afficher : plus cette distance est faible plus la priorité est élevée. On peut ainsi considérer comme niveau de priorité la valeur en ordonnée de la courbe correspondant à .la projection du point du document secondaire qui est le plus proche de la portion courante affichée sur l'écran.

L'unité de gestion d'affichage de l'invention permet de charger de manière sélective des éléments d'une page interactive. Les éléments sélectionnés correspondent à des parties de la page interactive que l'utilisateur affiche à un moment donné sur l'écran et des documents secondaires les plus proches dans la limite de la capacité mémoire disponible.

Le chargement sélectif de ces documents secondaires évite de charger le contenu de la page complète en mémoire et diminue ainsi de façon importante les nécessités en capacité mémoire.

L'invention est particulièrement adaptée à l'environnement d'un décodeur de télévision numérique dans lequel l'espace de mémoire disponible reste relativement faible en comparaison des ordinateurs.

L'invention peut être utilisée dans d'autres dispositifs ayant des capacités mémoires réduites, par exemple dans d'autres décodeurs, mais aussi dans les téléphones cellulaires, les terminaux de type PDA ("personal digital assistant").

### BRÈVE DESCRIPTION DES DESSINS

La figure 1 illustre l'unité de gestion d'affichage de l'invention.
La figure 2 illustre un exemple de page HTML.
La figure 3, partie A, illustre la page HTML de la figure 2 interprétée par un moteur HTML, et la partie B, associée à cette partie A, illustre un modèle, par exemple Gaussien, pour le stockage de données dans la mémoire.

### EXPOSÉ DÉTAILLÉ DE MODES DE RÉALISATION PARTICULIERS

L'invention concerne une unité de gestion d'affichage pour afficher sur un écran une portion courante de page interactive, par exemple HTML, lorsque cette page interactive, dite déroulante, requiert une zone d'affichage de dimension supérieure à la dimension dudit écran.

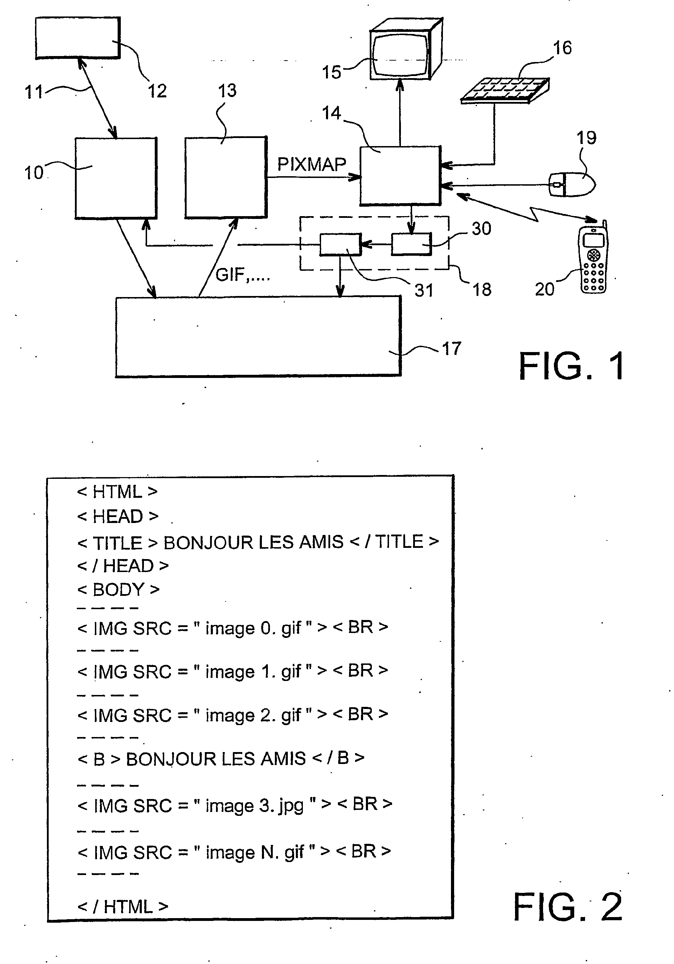

Comme illustré sur la figure 1, cette unité de gestion d'affichage comprend :
- une unité de liaison 10 destinée à recevoir à travers une liaison monodirectionnelle ("Broadcasting", objet carousel DSMCC) ou bidirectionnelle (dialogue au travers du protocole HTTP) 11, des données émises par un serveur distant 12, ledit serveur délivrant des documents interactifs constitués de documents principaux et de documents secondaires,
- une unité de conversion de format 13 du format GIF, par exemple, au format Pixmap, qui permet une décompression d'image,
- une unité d'attribution 14 pour contrôler l'affichage sur un écran 15 d'une portion de ladite page interactive déroulante, qui reçoit la commande de défilement (ou "scrolling"), par-exemple un curseur de déroulement de page, à partir d'un clavier 16, d'une souris 19 ou une télécommande 20, ou une navigation directionnelle par déplacement de focus d'élément interactif en élément interactif (à l'aide par exemple d'une télécommande).
- une mémoire 17 qui reçoit des informations de l'unité de liaison 10 et qui envoie des données à l'unité de conversion de format 13,
- une unité 18 de gestion de cette mémoire, recevant des informations de l'unité d'affichage 14 et envoyant des informations d'une part à la mémoire 17 et d'autre part à l'unité de liaison 10.

Cette unité de gestion de mémoire 18 comprend :
- une unité 30 d'attribution de niveaux de priorité pour attribuer à chaque document secondaire de la page interactive déroulante un niveau de priorité qui est fonction du positionnement dudit document secondaire par rapport à la portion courante affichée sur l'écran,
- une unité 31 de contrôle de mémoire pour contrôler le stockage dans la mémoire 17 des seules composantes ayant des niveaux de priorité les plus élevés, en coopération éventuelle avec l'unité de liaison 10 pour accéder à certaines de ces dites seules composantes ayant des niveaux de priorité les plus élevés lorsque ces dernières ne sont pas stockées dans la mémoire 17.

### Exemple de page HTML

La figure 2 illustre un exemple de page HTML. Celle-ci est une suite d'instructions en langage de haut niveau à laquelle sont associés des documents secondaires [images (formats GIF, JPEG, etc...) ; vidéo (formats MPEG, etc...), son, texte, etc..].

Dans cet exemple les documents secondaires sont les suivants :
- image 0.gif,
- image 1. gif,
- image 2. gif ...,
- image 3. jpg,
.....
- image N. gif.

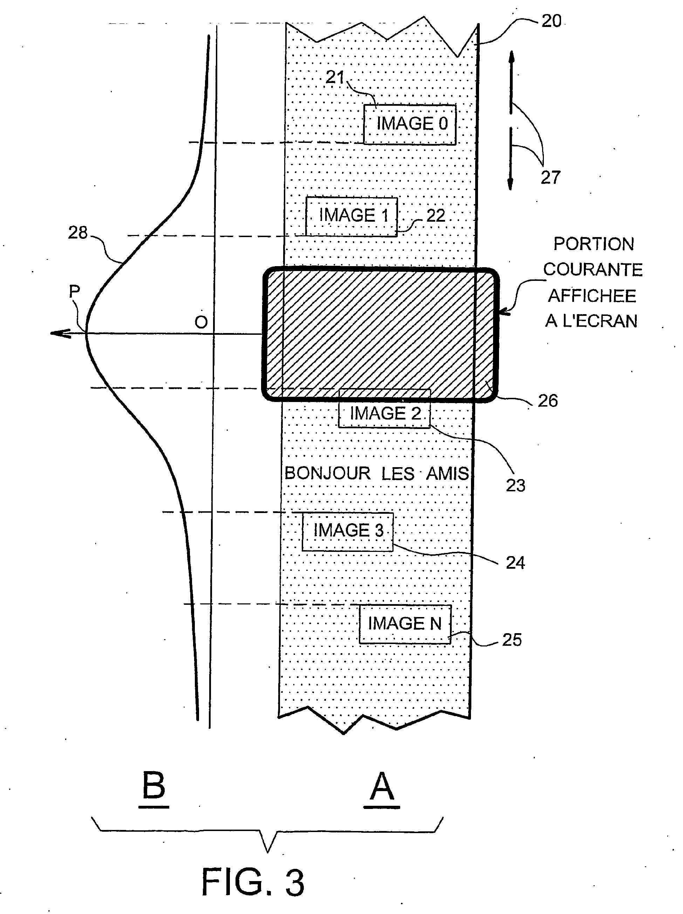

Comme cela est connu de l'homme de métier une telle page HTML est interprétée linéairement par un moteur ("browser"), pour produire une page 20 du type illustré sur la partie A de la figure 3. Dans cette page 20 sont associées par inclusion des documents secondaires: IMAGE0, IMAGE1, IMAGE2, IMAGE3,.... IMAGEN, repérés par les petits rectangles 21, 22, 23, 24 et 25.

On ne peut afficher sur un écran 26 qu'une portion courante de cette page 20, lorsque cette page requiert une zone d'affichage de dimension supérieure à la dimension de l'écran. L'utilisateur peut utiliser alors un clavier 16, une souris 19 ou une télécommande 20 pour déplacer la portion courante de visualisation de cette page HTML 20.

La référence 27 illustre le fait que cette page 20 est déroulante sur commande de l'utilisateur. Comme illustré sur cette figure 3, la commande de défilement peut-être verticale, elle peut également être horizontale, ou en diagonale : c'est une commande de défilement dans le plan.

Dans le cas d'un décodeur ("set-top-box"), par exemple, l'espace mémoire total réservé pour l'usage du moteur ne permet pas de mémoriser la totalité d'une longue page HTML. L'invention propose donc de privilégier le chargement et le stockage dans la mémoire des documents secondaires de la page déroulante qui sont positionnés dans une zone limitée autour de la portion courante affichée sur l'écran. Ces documents secondaires ont, en effet, la plus grande probabilité d'être visualisés sur l'écran lors d'un futur déplacement de la portion courante de visualisation de la page HTML. Les autres documents secondaires ne seront chargés qu'en fonction de la quantité de mémoire libre restante par rapport à l'espace mémoire total réservé pour l'usage du moteur.

La partie B de la figure 3, qui est associée à la partie A de cette figure, illustre un modèle, par exemple gaussien 28 pour le stockage des données dans la mémoire 17.

Ce modèle 28 permet d'associer à chaque document secondaire (image, etc...) de la page HTML un niveau de priorité. On peut par exemple prendre en considération la valeur en ordonnée de la courbe 28 correspondant à la projection du "point" du document secondaire qui est le plus proche de la portion courante affichée sur l'écran.

Selon le procédé de gestion d'affichage de l'invention, lorsqu'un utilisateur sollicite un changement (par déroulement) de la portion courante affichée à l'écran, pour afficher une nouvelle portion courante de la page HTML une commande est transmise à l'unité d'affichage 14. L'unité d'attribution de niveau de priorité 30 met à jour le niveau de priorité de chaque document secondaire en utilisant le modèle 28 illustré sur la partie B de la figure 3 en fonction de la nouvelle position relative par rapport à la portion courante affichée à l'écran 26. Plus le document secondaire est positionné à proximité du point central de la nouvelle portion courante à afficher à l'écran, plus la priorité est élevée. Pour chaque document secondaire de la page HTML (document 1 à document N), une valeur binaire (1 ou 0) détermine si oui ou non ce document est stocké en mémoire. En tenant compte du niveau de priorité et du chargement éventuel déjà effectué des documents, l'unité d'allocation de niveau de priorité 30 en déduit le tableau suivant :

| | priorité | valeur binaire |
|---|---|---|
| IMAGE 2 | P | 1 |
| IMAGE 1 | P-1 | 0 |
| IMAGE 3 | P-2 | 1 |
| IMAGE 0 | P-3 | 0 |
| IMAGE 4 | P-4 | 0 |

L'unité d'attribution de niveaux de priorité 30 commande alors l'unité de contrôle de mémoire 31 pour l'informer des documents secondaires qui peuvent être effacés de la mémoire 17 (ordre d'effacement potentiel) et des documents secondaires qui ne doivent pas l'être. L'unité de contrôle de mémoire 31 autorise alors l'effacement éventuel de certains documents secondaires stockés dans la mémoire, avec un jeu de verrouillage et de déverrouillage, et, en coopération éventuelle avec l'unité de liaison, charge dans la mémoire 17 certains de ces documents secondaires qui doivent être chargés dans la mémoire 17 et qui sont encore stockés sur le serveur distant 12.

Le fonctionnement dynamique dudit procédé est le suivant :

### 1. Conditions de départ

- tous les documents secondaires de priorité supérieure ou égale à N sont chargés en mémoire,
- tous les documents secondaires de priorité supérieure ou égale à N sont verrouillés en mémoire : ils ne peuvent être détruits automatiquement,
- tous les documents secondaires de priorité inférieure strictement à N sont déverrouillés en mémoire : ils sont susceptibles d'être détruits automatiquement, si nécessaire,
- une priorité est attribuée à chacun des documents secondaires et cette priorité est donnée au gestionnaire de mémoire sur les documents déjà chargés pour être utilisée en cas de nettoyage suite à un manque de place mémoire. Les documents de priorité la plus faible seront détruits en premier.

### 2. Chargement du document secondaire de priorité N-1

- verrouillage en mémoire de tous les documents secondaires de priorité N-1 déjà chargés,
- lancement du chargement de tous les documents secondaires de priorité N-1 encore non chargés,
- si mémoire insuffisante, libération d'un (ou de plusieurs si nécessaire) document secondaire non verrouillé de priorité la plus faible dans le gestionnaire de mémoire,
- si tous les documents secondaires de priorité N-1 chargés, verrouillage de tous ces documents secondaires.

### 3. Chargement du document secondaire de priorité N-2

Le fonctionnement est le même que celui décrit paragraphe 2 ci-dessus ...

### n. Arrêt du processus de chargement

Cet arrêt a lieu lorsque la mémoire est saturée. C'est à dire que tous les documents de priorité (N-X) n'ont pu être chargés en mémoire et que plus aucun document ne peut être détruit.

La reprise du processus de chargement est effectuée sur une commande de défilement avec :
- calcul et attribution de nouvelles priorités,
- lancement du processus de chargement.

### REFERENCES

[1] Version de la norme HTML "HTML 4.01 Specification W3C Recommendation 24 décembre 1999", qui peut être trouvée à l'adresse suivante : http : //www.w3.org/TR/1999/TEC-htm1401-1999 1224.

## Revendications

1. Procédé de gestion d'affichage sur un écran d'une portion courante de document, lorsqu'une page interactive, dite déroulante, de ce document requiert une zone d'affichage de dimension supérieure à la dimension dudit écran, ledit procédé comprenant :
- une étape de téléchargement de documents interactifs constitués de documents principaux et de documents secondaires
- une étape d'affichage sur l'écran d'une portion courante de ladite page interactive déroulante, **caractérisé en ce qu'**il comprend, en outre, une étape de stockage sélectif dans une mémoire de documents secondaires de la page interactive déroulante qui sont positionnées dans une zone voisine de la portion courante affichée sur l'écran ;
ledit procédé étant en outre **caractérisé en ce qu'**un niveau de priorité est attribué à chaque document secondaire de la page interactive en utilisant un modèle tel que la priorité d'un document secondaire dépend de sa distance par rapport au point central de la nouvelle portion courante à afficher.

2. Procédé selon la revendication 1, dans lequel on tient à jour, pour chaque document secondaire de la page interactive, une valeur binaire 1 ou 0, déterminant si oui ou non cette composante est stockée en mémoire, et son niveau de priorité de téléchargement.

3. Procédé selon la revendication 1, dans lequel ce modèle est un modèle gaussien.

4. Procédé selon la revendication 3, dans lequel on considère comme niveau de priorité la valeur en ordonnée de la courbe correspondant à la projection du point du document secondaire qui est le plus proche de la portion courante affichée sur l'écran.

5. Unité de gestion d'affichage pour afficher sur un écran (15) une portion courante de document, lorsqu'une page interactive, dite déroulante, de ce document requiert une zone d'affichage de dimension supérieure à la dimension dudit écran, ladite unité comprenant :
- une unité (10) de liaison à un serveur distant (12), ledit serveur (12) délivrant des documents interactifs constitués de documents principaux et de documents secondaires,
- une unité d'affichage (14) pour contrôler l'affichage sur l'écran (15) d'une portion courante de ladite page interactive déroulante,
**caractérisée en ce qu'**elle comprend, en outre, une mémoire (17) et une unité (18) de gestion de cette mémoire qui comprend :
• une unité d'attribution de niveaux de priorité (30) pour attribuer à chaque document secondaire de la page interactive déroulante un niveau de priorité qui est fonction du positionnement de chaque document secondaire par rapport à la portion courante affichée sur l'écran, ledit niveau de priorité attribué à chaque document secondaire de la page interactive étant établi en utilisant un modèle tel que la priorité d'un document secondaire dépend de sa distance par rapport au point central de la nouvelle portion courante à afficher ;
• une unité de contrôle de mémoire (31) pour contrôler le stockage dans la mémoire (17) des documents secondaires ayant les niveaux de priorité les plus élevés, en coopération éventuelle avec l'unité de liaison (10) pour accéder à certains de ces documents secondaires ayant les niveaux de priorité les plus élevés lorsque ces derniers ne sont pas stockés dans la mémoire (17).

6. Unité de gestion selon la revendication 5 comprenant, en outre, une unité de conversion de format (13).

7. Unité de gestion selon la revendication 6, dans laquelle l'unité de conversion de format (13) permet une décompression des images.

8. Unité de gestion selon la revendication 5, dans laquelle l'unité de liaison (10) est reliée au serveur distant (12) par une liaison monodirectionnelle ou bidirectionnelle.

9. Unité de gestion selon la revendication 5, dans laquelle la page interactive est une page HTML.

10. Unité de gestion selon la revendication 5, dans laquelle un clavier (16) et/ou une souris (19) et/ou une télécommande (20) sont reliés à l'unité d'affichage (14).

## Claims

1. Method for managing the display on a screen of a current portion of document, when an interactive page, known as scrolling, of this document requires a display zone of a greater dimension than the dimension of said screen, said method comprising:
- a step for downloading interactive documents constituted by main documents and secondary documents,
- a step for displaying a current portion of the said scrolling interactive page on the screen, **characterized in that** it also comprises, a selective storage step in a memory of secondary documents of the scrolling interactive page that are positioned in a neighbouring zone of the current portion displayed on the screen,
said method also being **characterized in that** a priority level is assigned to each secondary document of the interactive page by using a model such that the priority of a secondary document depends on its distance from the central point of the new current portion to display.

2. Method according to claim 1, wherein for each secondary document of the interactive page, a binary value 1 or 0 is kept up to date, determining whether or not this component is stored in memory, and its downloading priority level.

3. Method according to claim 1, wherein this model is a Gaussian model.

4. Method according to claim 3, wherein a priority level is considered as the ordinate value of the curve corresponding to the projection of the secondary document point that is the nearest to the current portion displayed on the screen.

5. Display management unit for displaying on a screen (15) a current document portion, when an interactive page, known as scrolling, of this document requires a display zone of a dimension greater than the dimension of the said screen, the said unit comprising:
- a link unit (10) to a remote server (12), the said server (12) providing the interactive documents constituted by main documents and secondary documents,
- a display unit (14) to control the display on the screen (15) of a current portion of the said scrolling interactive page,
**characterized in that** it also comprises a memory (17) and a unit (18) for controlling this memory which comprises:
• a priority level allocation unit (30) to assign each secondary document of the scrolling interactive page a priority level that depends on the position of the said secondary document with respect to the current portion displayed on the screen, the said priority level assigned to each secondary document of the interactive page being established by using a model such that the priority of a secondary document depends on its distance with respect to the central point of the new current portion to display,
• a memory control unit (31) to control the storage in the memory (17) of secondary documents having the highest priority levels, in possible co-operation with the link unit (10) to access certain of these secondary documents having the highest priority levels when these secondary documents are not stored in the memory (17).

6. Management unit according to claim 5, also comprising a format conversion unit (13).

7. Management unit according to claim 6, wherein the format conversion unit (13) can perform an image decompression.

8. Management unit according to claim 5, wherein the link unit (10) is connected to the remote server (12) by a monodirectional or bidirectional link.

9. Management unit according to claim 5, wherein the interactive page is an HTML page.

10. Management unit according to claim 5, wherein a keyboard (16) and/or a mouse (19) and/or a remote control (20) are connected to the display unit (14).

## Patentansprüche

1. Verfahren zum Verwalten einer Anzeige eines aktuellen Abschnitts eines Dokuments an einem Bildschirm, wenn eine so genannte scrollende interaktive Seite dieses Dokuments einen Anzeigebereich erfordert, dessen Abmessung größer ist als die Abmessung des Bildschirms, wobei das Verfahren
- einen Schritt des Herunterladens von interaktiven Dokumenten, die aus Hauptdokumenten und Nebendokumenten bestehen,
- einen Schritt der Anzeige eines aktuellen Abschnitts der scrollenden interaktiven Seite am Bildschirm umfasst, **dadurch gekennzeichnet, dass** es ferner einen Schritt des selektiven Speicherns von Nebendokumenten der scrollenden interaktiven Seite in einem Speicher umfasst, welche in einem zu dem aktuellen, am Bildschirm angezeigten Abschnitt benachbarten Bereich positioniert sind,
wobei das Verfahren ferner **dadurch gekennzeichnet ist, dass** jedem Nebendokument der interaktiven Seite ein Prioritätsniveau unter Verwendung eines derartigen Modells zugewiesen wird, dass die Priorität eines Nebendokuments von seiner Entfernung zu dem zentralen Punkt des neuen aktuellen anzuzeigenden Abschnitts abhängt.

2. Verfahren nach Anspruch 1, bei dem für jedes Nebendokument der interaktiven Seite sein Download-Prioritätsniveau sowie ein binärer Wert 1 oder 0 aktualisiert werden, welcher festlegt, ob diese Komponente in dem Speicher gespeichert ist oder nicht.

3. Verfahren nach Anspruch 1, bei dem dieses Modell ein Gauß-Modell ist.

4. Verfahren nach Anspruch 3, bei dem der Ordinatenwert der Kurve, der der Projektion des Punkts des Nebendokuments entspricht, der dem aktuellen, am Bildschirm angezeigten Abschnitt am nächsten ist, als Prioritätsniveau angesehen wird.

5. Einheit zum Verwalten einer Anzeige zum Anzeigen eines aktuellen Abschnitts eines Dokuments an einem Bildschirm (15), wenn eine so genannte scrollende interaktive Seite dieses Dokuments einen Anzeigebereich erfordert, dessen Abmessung größer ist als die Abmessung des Bildschirms, wobei die Einheit Folgendes umfasst:
- eine Einheit (10) zum Verbinden mit einem abgesetzten Server (12), wobei der Server (12) interaktive Dokumente zustellt, die aus Hauptdokumenten und Nebendokumenten bestehen,
- eine Anzeigeeinheit (14) zum Kontrollieren der Anzeige eines aktuellen Abschnitts der scrollenden interaktiven Seite am Bildschirm (15),
**dadurch gekennzeichnet, dass** sie ferner einen Speicher (17) und eine Einheit (18) zum Verwalten dieses Speichers umfasst, mit
- einer Prioritätsniveau-Zuweisungseinheit (30), um jedem Nebendokument der scrollenden interaktiven Seite ein Prioritätsniveau zuzuweisen, das von der Positionierung jedes Nebendokuments in Bezug auf den aktuellen, am Bildschirm angezeigten Abschnitt abhängt, wobei das jedem Nebendokument der interaktiven Seite zugewiesene Prioritätsniveau unter Verwendung eines derartigen Modells festgestellt wird, dass die Priorität eines Nebendokuments von seiner Entfernung zu dem zentralen Punkt des neuen aktuellen anzuzeigenden Abschnitts abhängt;
- einer Speicherkontrolleinheit (31), um das Speichern der Nebendokumente mit den höchsten Prioritätsniveaus in dem Speicher (17) zu kontrollieren in eventueller Zusammenarbeit mit der Verbindungseinheit (10), um auf manche dieser Nebendokumente mit den höchsten Prioritätsniveaus zuzugreifen, wenn diese in dem Speicher (17) nicht gespeichert sind.

6. Verwaltungseinheit nach Anspruch 5, welche ferner eine Formatkonvertierungseinheit (13) umfasst.

7. Verwaltungseinheit nach Anspruch 6, bei der die Formatkonvertierungseinheit (13) ein Dekomprimieren der Bilder ermöglicht.

8. Verwaltungseinheit nach Anspruch 5, bei der die Verbindungseinheit (10) mit dem abgesetzten Server (12) über eine monodirektionale oder bidirektionale Verbindung verbunden ist.

9. Verwaltungseinheit nach Anspruch 5, bei der die interaktive Seite eine HTML-Seite ist.

10. Verwaltungseinheit nach Anspruch 5, bei der eine Tastatur (16) und/oder eine Maus (19) und/oder eine Fernbedienung (20) mit der Anzeigeeinheit (14) verbunden sind.
